# EUROPEAN PATENT APPLICATION

(11) **EP 2 040 326 A1**
(43) Date of publication of application: **25.03.2009**
(21) Application number: 08011117.2
(22) Date of filing: 19.06.2008
(51) Int. Cl.: H01M 10/48, H01M 10/06

(54) **Control apparatus for an electric battery**

(30) Priority: 21.09.2007 IT MI20070318 U
(71) Applicant: Fratelli Consolandi S.r.L., 20122 Milano (IT)
(72) Inventor: Pocacqua, Dario, 20122 Milano (IT)
(74) Representative: Lunati, Vittoriano

(57) **Abstract**

There is provided a control apparatus (1) of an electric battery (20) positioned on an electric machine (21) and including a liquid realized by an electrolyte solution, comprising: a sensor (2) suitable to detect the presence of the electrolyte solution above a chosen level inside the electric battery (2), a control device (3), that can be connected to an electrical operating connection (22) part of the electric machine (21) and suitable to permit, in selectively open or closed condition, operation of at least one function of the electric machine (21), the control device (3) being connected to the sensor (2) and being suitable to vary the open or closed condition of the electrical operating connection (22) in the absence of the electrolyte solution above the chosen level.

## Description

The invention relates to a control apparatus for an electric battery of the type described in the preamble of claim 1.

There are currently known electric lead batteries or similar, used in applications that require a high ratio between delivered power and weight, such as lift trucks, to supply electrical current to motor vehicles and the like.

As it is known, these batteries are realized by two lead electrodes immersed in an electrolyte solution preferable realized by water and sulphuric acid.

It is known that, in these batteries, the level of the electrolyte solution can decrease due to evaporation of the solution, to leakages or yet other events. Therefore, it may occur that part of the electrodes are not immersed in the electrolyte solution.

In this case, it is advisable to immediately top up the electrolyte solution, or of a part thereof, in particular water, to prevent damage to these batteries.

In fact, in the cases indicated, rapid deterioration of the batteries can occur, and in particular loss of electrical power, decreased cycle life, less peak power and the like.

These problems are worsened in the case in which the battery is also used in these conditions.

To solve the present drawback, sensors have been produced to detect the absence of electrolyte liquid above a certain level and to indicate, with a warning light, the need to top up with electrolyte solution or water.

However, in many cases the inexperienced user does not top up the electrolyte solution in the presence of the aforesaid warning.

This occurs in particular when vehicles, such as lift trucks, are hired to uninformed or disinterested users, who disregard any warnings or possible damage to the vehicle.

In this situation the general aim underlying the present invention is to devise a control apparatus for an electric battery capable of substantially overcoming the aforesaid drawbacks.

Within said general aim, an important particular aim is to obtain a control apparatus for an electric battery capable of preventing the use thereof by the user in conditions in which the level of the electrolyte liquid is low.

The aims specified are achieved by a control apparatus of an electric battery as described in the appended claim 1.

The accompanying drawings show, by way of non-limiting example, a specific preferred embodiment of a control apparatus for an electric battery according to the finding. In particular, in the drawings:

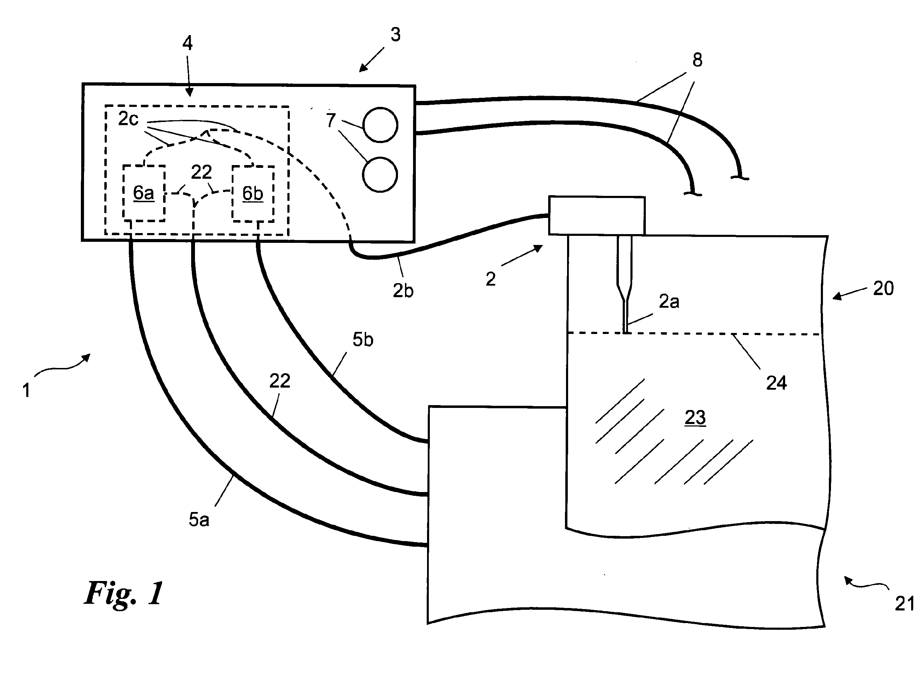

**Fig. 1** shows an operating diagram of the apparatus according to the invention. With reference to the aforesaid Figures, the control apparatus according to the finding is indicated as a whole with the number **1**.

It is suitable to be positioned on electric batteries **20**, in particular electric batteries 20 for electrically operating one or more functions of an electric machine **21**, such as the functions of lifting or forward movement of lift trucks or the like.

It comprises a sensor **2** suitable to detect the presence of the liquid of which the electrolyte solution **23** is realized above a predetermined level **24** in the battery 20.

In particular, the sensor 2 comprises a tip **2a** including two electrical connections part of a same electrical circuit.

These two electrical connections are normally immersed in the electrolyte solution 23, this electrolyte solution 23 thus closes said electrical circuit permitting the electrical current to pass between the two electrical connections of the sensor 2.

If the electrolyte solution 23 drops below the tip 2a, the two electrical connections are no longer in reciprocal electrical connection and the electrical current no longer flows inside said circuit.

The height of the tip 2a therefore defines the predetermined level 24 below which it is advisable for the electrolyte solution 23 not to drop.

Said electrical circuit is then connected to an electrical connection of the sensor **2b** through which electrical current passes if the tip 2a is immersed in the electrolyte solution, as described, or vice versa.

The sensor 2 thus permits detection of the presence or absence of electrolyte solution 23 above a predetermined level 24 and transmission of a signal, in particular an electrical signal correlated to said parameter.

The sensor described 2 is known per se and produced, for example, by the firm "Omicron" with the name of "Signal/89".

The apparatus 1 then comprises a control device **3**, connected to the sensor 2 and in particular to the electrical connection of the sensor 2b.

Moreover, the control device 3 can be connected to an electrical operating connection **22** of the machine 21.

The electrical operating connection 22 is part of the electric machine 21 and suitable to permit, in selectively open or closed condition, operation of one or more functions of this electric machine 21.

In particular, the electrical connection 22, in closed condition and therefore with passage of electrical current or in open condition and therefore without passage of electrical current, can be necessary for operation of a load platform of a lift truck, for forward movement of a lift truck or for yet other functions.

It can be realized, for example, by a power cable, positive or negative, of the function of the machine 20, or the like.

The control device 3 is suitable to change the open or closed condition of the electrical operating connection 22, and therefore to interrupt operation of said function, in the absence of electrolyte solution 23 above a predetermined level 24, and in particular in the absence of electrical signal in the electrical connection of the sensor 2.

In particular, the control device 3 comprises means **4** to restore and interrupt the electrical operating connection 22 that are interposed in the electrical operating connection 22.

They are preferably realized by at least a first electrical control connection **5a** that can be connected to the electrical operating connection 22, in such a manner as to be interposed therein, and by at least a first relay **6a**, connected to the electrical connection of the sensor 2b and to this electrical control connection 5a.

The relay 6a is suitable to vary, as a function of the presence or absence of electrical current delivered from the electrical connection of the sensor 2b, the open or closed condition of the circuit realized by the electrical operating connection 22 and by the first electrical control connection 5a.

The relay 6a can be selectively in closed or open condition, when electrical current is delivered from the electrical connection of the sensor 2b, depending on whether the electrical operating connection 22 is suitable to permit operation of said function respectively in closed or open condition.

In particular, both the first electrical control connection 5a and a second electrical control connection **5b** and a second relay **6b** can be present.

Moreover, the two relays 6a and 6b are preferably one in open condition and the other in closed condition, when the electrical current is delivered from the electrical connection of the sensor 2b, so that the electrical operating connection 22 can be connected to the first or to the second electrical control connection 5a depending on the operating conditions.

The control device 3 is, moreover, suitable to visually indicate the presence or absence of electrolyte solution 23 below the predetermined level 24 by means of suitable visual or sound indicator means **7**.

Finally, it comprises both a positive and negative electrical connection **8** with a battery, and in particular with the electric battery 20, suitable to supply the device 1 with electrical energy.

Operation of the control apparatus 1, described above in an analytical and structural sense, is as follows.

The sensor 2 is positioned on the electric battery 20 and the height of the tip 2a is appropriately adjusted according to the predetermined level 24 below which the electrolyte solution 23 must not drop.

Subsequently, the electrical connection of the sensor 2b is connected to the control device 3 and the electrical operating connection 22 is connected to the means 4 to restore and interrupt the device 3 and in particular to the first or second electrical control connection 5a or 5b.

In the case in which the electrical operating connection 22 permits activation of said function in closed condition, this is connected to the first electrical control connection 5a and to the first relay 6a which is in closed condition when the electrical current is delivered from the electrical connection of the sensor 2b.

If the electrolyte solution 23 drops below the predetermined level 24, the tip 2a does not close the circuit through this electrolyte solution 23 and does not send electrical current, or other signals, to the device 3, and in particular to the first relay 6a.

Consequently, the first relay 6a opens the circuit and does not permit current to pass through the electrical operating connection 22, thereby deactivating said function of the electric machine 21.

The finding achieves important advantages.

In fact, the apparatus 1 permits detection of the presence or absence of electrolyte solution 23, above a predetermined level 24, inside an electric battery 20 and interruption of the use of the machine 21, or of a function thereof.

Therefore, the battery 20 is not subject to operation in unfavourable conditions and thus has a longer and improved cycle life, duration and peak power.

The apparatus 1 is also very versatile and can be combined with different functions of the machine 1 and act in the case of the electrical connection 22 permitting operation of said function both in closed and in open condition.

The details can replaced by equivalent elements and the materials and dimensions can be any.

## Claims

1. Control apparatus (1) of an electric battery (20) positioned on an electric machine (21) and including a liquid realized by an electrolyte solution (23), said apparatus (1) comprising: a sensor (2) suitable to detect the presence of said electrolyte solution (23) above a chosen level (24) inside said electric battery (2) and being **characterized in that** it comprises: a control device (3), that can be connected to an electrical operating connection (22) part of said electric machine (21) and suitable to permit, in selectively open or closed condition, operation of at least one function of said this electric machine (21), said control device (3) being connected to said sensor (2) and being suitable to vary said open or closed condition of said electrical operating connection (22) in the absence of said electrolyte solution (23) above said chosen level (24).

2. Apparatus according to Claim 1, comprising means (4) to restore and interrupt the electrical operating connection (22) suitable to be interposed in said electrical operating connection (22).

3. Apparatus according to Claim 2, wherein said means (4) to restore and interrupt comprise at least a first electrical control connection (5a) that can be connected to the electrical operating connection (22), in such a manner as to be interposed therein, and a first relay (6a), connected to the sensor (2) and to said electrical control connection (5a), suitable to vary said open or closed condition of the circuit realized by said electrical operating connection (22) and by said first electrical control connection (5a) in the absence said electrolyte solution (23) above said chosen level (24).

4. Apparatus according to Claim 3 wherein said means (4) to restore and interrupt comprise a first and a second electrical control connection (5a, 5b) suitable respectively to open and close said circuit realized by said electrical operating connection (22) and by said first or second electrical control connection (5a. 5b) in the absence of said electrolyte solution (23) above said chosen level (24).

5. Apparatus according to Claim 3 or 4, wherein said sensor (2) is connected to said control device (3) through an electrical connection of the sensor (2b) suitable to influence said relays (6a, 6b).

6. Control apparatus (1) of an electric battery (20), **characterized in that** it comprises one or more of the characteristics claimed, described and illustrated.
